# EUROPÄISCHE PATENTANMELDUNG

(11) **EP 4 578 677 A1**
(43) Veröffentlichungstag der Anmeldung: **02.07.2025**
(21) Anmeldenummer: 24223783.2
(22) Anmeldetag: 30.12.2024
(51) Int. Cl.: B60J 7/20

(54) **CABRIOLET-FAHRZEUG MIT ABDECKELEMENTEN**

(30) Priorität: 31.12.2023 DE 102023136909
(71) Anmelder: Valmet Automotive Oy, 23500 Uusikaupunki (FI)
(72) Erfinder: Hollenbeck, Sven, 49492 Westerkappeln (DE); Wesselmann, Mark, 49509 Recke (DE)
(74) Vertreter: Kronthaler, Schmidt & Coll.

(57) **Zusammenfassung**

Es wird ein Cabriolet-Fahrzeug mit einem Verdeck sowie mit einem ersten Abdeckelement (10) zum zumindest teilweisen Abdecken eines Verdeckstauraums (4) und wenigstens einem hiermit drehbar verbundenen zweiten Abdeckelement (13A, 13B) beschrieben. Das erste Abdeckelement (10) ist mittels wenigstens eines Antriebs (15) um eine fahrzeugfeste Drehachse (A) aus einer den Verdeckstauraum (4) abdeckenden Schließposition heraus schwenkbar. Das zweite Abdeckelement (13A, 13B) wird während einer Bewegung des ersten Abdeckelements (10) gemeinsam mit diesem verstellt und vom Antrieb (15) um eine mit dem ersten Abdeckelement (10) fest verbundene Drehachse (G) gegenüber dem ersten Abdeckelement (10) zwischen einer Endposition, in der eine Oberseite (13A2, 13B2) des zweiten Abdeckelements (13A, 13B) und eine Oberseite (10B) des ersten Abdeckelements (10) eine gemeinsame Oberfläche bilden, und wenigstens einer zweiten Position verschwenkt, in der das zweite Abdeckelement (13A, 13B) mit seiner Unterseite (13A1, 13B1) in Richtung einer Unterseite (10A) des ersten Abdeckelements (10) verlagert ist. Der Antrieb (15) ist dazu eingerichtet, das zweite Abdeckelement (13A, 13B) während einer Schwenkbewegung des ersten Abdeckelements (10) in Richtung seiner Schließ stellung gegenüber dem ersten Abdeckelement (10) in seine Endposition zu überführen, bevor das erste Abdeckelement (10) in seiner Schließposition vorliegt.

## Beschreibung

Die erfindungsgemäße Technologie betrifft ein Cabriolet-Fahrzeug mit einem Verdeck und mit wenigstens einem ersten Abdeckelement zum zumindest teilweisen Abdecken des Verdeckstauraums und mit wenigstens einem zweiten Abdeckelement nach der im Oberbegriff des Patentanspruches 1 näher definierten Art.

Aus der Praxis bekannte Cabriolet-Fahrzeuge umfassen üblicherweise ein Verdeck, das als ein sogenanntes Soft-Top-Verdeck mit einem aufspannbaren Verdeckbezug oder als ein sogenanntes Hard-Top mit starren Dachsegmenten ausgebildet sein kann und zwischen einer einen Fahrzeuginnenraum überspannenden Verdeckschließstellung und einer den Fahrzeuginnenraum nach oben freigebenden Ablagestellung verlagerbar ist. In Ablagestellung, d h. bei geöffnetem Verdeck, ist das Verdeck meist in einem heckseitigen Ablageraum, dem sogenannten Verdeckkasten angeordnet und darin zumindest teilweise von einem Verdeckkastendeckel, welcher zugleich auch ein Heck-Kofferraumdeckel sein kann, abgedeckt. Der Verdeckkastendeckel ist an wenigstens einem korrespondierenden Bauelement, in der Regel am Fahrzeugaufbau, verschwenkbar gelagert und relativ zu dem Verdeckkasten zwischen einer abgesenkten Abdeckstellung und wenigstens einer angehobenen Freigabestellung verschwenkbar.

Zum Verstellen des Verdecks dient ein Verdeckgestänge, welches in der Regel beidseits des Verdecks in Fahrzeuglängsrichtung eine Lenkeranordnung aufweist. Die Lenkeranordnung durchgreift während des Schließvorganges und in der Schließstellung des Verdecks eine jeweilige Gestängedurchtrittsöffnung, die heckseits seitlich am Fahrzeugaufbau, aber auch an einer Hutablage oder anderen Verkleidungselementen angeordnet sein kann.

Um derartige Gestängedurchtrittsöffnungen in abgelegter oder geöffneter Ruheposition des Verdecks abzudecken, werden Abdeckungen, welche unabhängig von ihrem Bewegungsmechanismus als Gestängeklappen bezeichnet werden, eingesetzt. Diese sind durch einen zugeordneten Antrieb zwischen einer Abdeckstellung und einer Offenstellung bewegbar.

In der Praxis wird die Gestängeklappe am Fahrzeugaufbau oder auch am Verdeckkastendeckel gehalten. Je nach Stellung des Verdecks kann sich die Gestängeklappe in Endpositionen des Verdecks, insbesondere bei geöffnetem Verdeck, in ihrer Schließstellung befinden und bei einer Bewegung des Verdecks und ggf. auch bei geschlossenem Verdeck in ihrer Offenstellung befinden.

Der Verdeckkastendeckel nimmt in den Endlagen des Verdecks jeweils seine Abdeckstellung ein und wird üblicherweise lediglich beim Verlagern des Verdecks in seine Freigabestellung bewegt, so dass das Verdeck aus dem Verdeckkasten ausgefahren und somit geschlossen oder in den Verdeckkasten eingefahren und somit geöffnet werden kann. Die Bewegungsabläufe können dabei sequenziell oder parallel erfolgen.

Der Antrieb unterschiedlicher im Zuge einer Verdeckbewegung bewegter Bauelemente wie z. B. Verdeckkastendeckel, Gestängeklappen, Hutablage, weitere Verkleidungs- oder Ausstattungselemente oder Schlösser wie ein Schloss eines Verdeckkastendeckels erfolgt bei Cabriolet-Fahrzeugen in der Serienproduktion meist mit unterschiedlichen Antrieben und zum Teil mit komplexen Mechanismen.

Für eine Gestängeklappe ist es beispielsweise aus der Praxis bekannt, diese mit einem separaten Elektromotor anzutreiben oder mit einem Seilzug mit dem Verdeckgestänge zu koppeln, so dass sie mit der Verdeckbewegung verlagert wird, das heißt beim Verlagern des Verdecks durch dieses selbst angetrieben wird. Der Gestängeklappenantrieb kann auch mit der Bewegung des Verdeckkastendeckels kombiniert sein, wie es z. B. in der DE 38 01 148 C1, der DE 10 2005 033 537 A1, der DE 10 2013 111 924 A1 und der DE 10 2019 131 003 A1 beschrieben ist.

Wenn die Bewegung einer Gestängeklappe eines Cabriolet-Verdecksystems beispielsweise über Bowdenzüge an die Bewegung des Verdeckkastendeckels gekoppelt ist, besteht die Gefahr einer Kollision der Gestängeklappe mit den fahrzeugseitigen Verkleidungen oder einer schabenden Ablage auf der Karosserie bzw. deren Verkleidung, was die Funktionsweise der Gestängeklappe und die Optik des Ablagebereichs beeinträchtigen kann.

Es ist Aufgabe der erfindungsgemäßen Technologie, zumindest einen Nachteil von einer vorbekannten Lösung zu verringern oder zu beheben oder eine alternative Lösung vorzuschlagen. Es ist insbesondere Aufgabe der hier offenbarten Technologie, ein Cabriolet-Fahrzeug mit einem Verdeck und mit wenigstens einem ersten Abdeckelement zum zumindest teilweisen Abdecken des Verdeckstauraums und mit wenigstens einem zweiten Abdeckelement zur Verfügung zu stellen, das hinsichtlich mindestens einer der folgenden Faktoren verbessert ist: Herstellungskosten, Komplexität der Herstellung, Montageaufwand, Bauraumausnutzung, Betriebssicherheit, Funktionalität, Nachhaltigkeit, Bauteilzuverlässigkeit und optisches Erscheinungsbild.

Diese Aufgabe wird durch ein Cabriolet-Fahrzeug mit den Merkmalen des Patentanspruches 1 gelöst. Weitere vorteilhafte Ausgestaltungen mit zweckmäßigen Weiterbildungen des erfindungsgemäßen Cabriolet-Fahrzeugs ergeben sich aus den weiteren Patentansprüchen.

Es wird mithin ein Cabriolet-Fahrzeug mit einem Verdeck vorgeschlagen, das zwischen einer einen Fahrzeuginnenraum überspannenden Verdeckschließstellung und einer den Fahrzeuginnenraum nach oben freigebenden Verdeckablagestellung in einem Verdeckstauraum verlagerbar ist und ein erstes Abdeckelement zum zumindest teilweisen Abdecken des Verdeckstauraums und wenigstens ein hiermit drehbar verbundenes zweites Abdeckelement aufweist. Das erste Abdeckelement ist zur Freigabe einer Verdeckbewegung mittels wenigstens eines Antriebs um eine fahrzeugfeste Drehachse aus einer den Verdeckstauraum abdeckenden Schließposition heraus schwenkbar. Das zweite Abdeckelement ist während einer Bewegung des ersten Abdeckelements gemeinsam mit diesem verstellbar. Darüber hinaus ist das zweite Abdeckelement vom Antrieb um eine mit dem ersten Abdeckelement fest verbundene Drehachse gegenüber dem ersten Abdeckelement zwischen einer Endposition, in der eine Oberseite des zweiten Abdeckelements und eine Oberseite des ersten Abdeckelements eine gemeinsame Oberfläche bilden, und wenigstens einer zweiten Position verschwenkbar, in der das zweite Abdeckelement mit seiner Unterseite in Richtung einer Unterseite des ersten Abdeckelements verschwenkt ist.

Erfindungsgemäß ist der Antrieb dazu eingerichtet, das zweite Abdeckelement während einer Schwenkbewegung des ersten Abdeckelements in Richtung seiner Schließstellung gegenüber dem ersten Abdeckelement in seine Endposition zu überführen, bevor das erste Abdeckelement in seiner Schließposition vorliegt.

Mit anderen Worten ist der Antrieb so ausgeführt, dass die Bewegung des zweiten Abdeckelements gegenüber dem ersten Abdeckelement vor der Bewegung des ersten Abdeckelements endet. Dann legt sich das zweite Abdeckelement gemeinsam mit dem ersten Abdeckelement im Wesentlichen lediglich von oben auf einer Fahrzeugkarosserie oder einer damit verbundenen Verkleidung ab, und der Verdeckstauraum und ein von dem zweiten Abdeckelement abzudeckender Bereich ist abgedeckt.

Der Verdeckstauraum bzw. Verdeckablageraum wird gewöhnlich als Verdeckkasten bezeichnet, obgleich der Verdeckstauraum kein separater Kasten sein muss, sondern auch Teil eines heckseitigen Stauraumes sein kann, der teilweise auch für andere zu verstauende Komponenten und zur Gepäckaufbewahrung ausgelegt sein kann. Im nachfolgenden wird daher der Begriff Verdeckkasten stets im weitesten Sinn verstanden.

Das zweite Abdeckelement und das erste Abdeckelement können bei einer konstruktiv einfachen Weiterbildung des Cabriolet-Fahrzeug zumindest bereichsweise randseitig mit ihren Unterseiten auf einer Fahrzeugkarosserie aufliegen, wenn das erste Abdeckelement in seiner Schließposition angeordnet ist.

Bei einer vorteilhaften Ausführung kann das zweite Abdeckelement an einem Lenker, der um die Drehachse gegenüber dem ersten Abdeckelement verschwenkbar ist, gelagert sein, wobei der Lenker über eine Federeinheit mit einem drehbar mit dem Lenker verbundenen Schwenkhebel derart zusammenwirkt, dass eine Federkraft der Federeinheit ein freies Ende des Schwenkhebels von dem Lenker wegdrückt. Somit kann eine weitere antriebsseitige Betätigung des zweiten Abdeckelements, das in Bezug auf das erste Abdeckelement bereits seine Endposition erreicht hat, während der abschließenden Bewegung des ersten Abdeckelements in Richtung seiner Schließstellung über die Federeinheit rein in Kompression umgewandelt werden, ohne dass das zweite Abdeckelement währenddessen gegenüber dem ersten Abdeckelement verstellt wird.

Es wird mithin ein Leerhub über ein federbelastetes Ausgleichselement bzw. die Federeinheit erzeugt. Die Ausgestaltung des federbelasteten Ausgleichselements, z. B. einer Druckfeder, und dessen Positionierung ist vom Fachmann frei wählbar.

Das zweite Abdeckelement kann in seiner Endstellung während einer Schwenkbewegung des ersten Abdeckelements in Richtung seiner Schließstellung mit dem Schwenkhebel an einem karosserieseitigen Anschlag in Anlage kommen und gegen die Federkraft der Federeinheit verstellt werden, wenn das erste Abdeckelement in seine Schließstellung gelangt. Mit anderen Worten wird das zweite Abdeckelement entgegen der Federkraft aus einer erreichten Endstellung gegenüber dem ersten Abdeckelement verspannt und so an der Karosserie abgelegt. Dabei kann die Anordnung so ausgelegt sein, dass sich ein Winkel zwischen dem zweiten Abdeckelement und dem ersten Abdeckelement sich beim Spannen der Federeinheit nicht ändert. Somit sind die Abdeckelemente in der Schließstellung des ersten Abdeckelements während eines Fahrbetriebes des Cabriolet-Fahrzeugs mit geringem konstruktiven Aufwand in einer stabilen Position gehalten.

Der Schwenkhebel kann mit seinem freien Ende in eine Kulissenbahn eingreifen, die fest mit dem Lenker verbunden ist. Dann kann die Kulissenbahn einen Schwenkwinkelbereich des Schwenkhebels gegenüber dem Lenker mit geringem Aufwand begrenzen, und der Schwenkhebel wird jeweils in definierten Stellungen gegenüber dem Lenker gehalten.

Der Antrieb kann auf bauraumgünstige Weise und mit hohem Freiheitsgrad über ein flexibles Zugmittel, insbesondere einem Bowdenzug, mit dem zweiten Abdeckelement in Wirkverbindung stehen, über das das zweite Abdeckelement mit geringem Betätigungsaufwand gegen die Federkraft einer weiteren Federeinheit aus der Endstellung in Richtung der Unterseite des ersten Abdeckelements verschwenkbar ist.

Das erste Abdeckelement kann in konstruktiv einfacher Art und Weise über wenigstens zwei drehbar miteinander verbundene Hebelelemente verschwenkbar mit der Fahrzeugkarosserie verbunden sein, wobei der Antrieb das erste Abdeckelement über die Hebelelementen antreibt.

Unter dem Begriff Verdeckbewegung sind dabei vorliegend alle im Rahmen einer Verstellung des Verdecks erfolgenden Bauelementbewegungen zu verstehen, d. h. auch solche, die vor oder nach der Bewegung des eigentlichen Verdecks erfolgen wie z. B. das Öffnen und Schließen eines Verdeckkastendeckels. Weiterhin ist unter der Verschwenkbarkeit des ersten Abdeckelements um eine fahrzeugfeste Drehachse vorliegend sowohl eine direkte Anbindung des ersten Abdeckelements an eine fahrzeugfeste Drehachse wie auch eine indirekte Anbindung, z. B. mittels eines Mehrgelenks, zu verstehen.

Die Schließposition des ersten Abdeckelements entspricht im Falle eines Verdeckkastendeckels einer abgesenkten, einen Verdeckstauraum schließenden Position des Verdeckkastendeckels und die zweite Position einer angehobenen, eine Öffnung des Verdeckstauraums freigebenden Position des Verdeckkastendeckels.

Die zweite Position des zweiten Abdeckelements kann im Fall einer Gestängeklappe einer eingeklappten, eine Gestängedurchtrittsöffnung freigebenden Stellung der Gestängeklappe und die Endstellung einer ausgeklappten, eine Gestängedurchtrittsöffnung abdeckenden Stellung der Gestängeklappe.

Der Antrieb kann einen Motor aufweisen, der an dem ersten Abdeckelement angeordnet ist und an einem Drehpunkt der Hebelelemente direkt oder mittels eines Getriebes angreift. In einer zweckmäßigen Ausgestaltung ist der Motor derart ausgelegt, dass die gewünschte Funktion mit einem einzigen Motor umgesetzt werden kann. Bei einer Ausführung mit einem Verdeckkastendeckel kann der eine Motor z. B. einseitig am Verdeckkastendeckel oder zentral montiert sein.

Die Hebelelemente können vorteilhafterweise eine eine Drehstell bewegung des Antriebs umsetzende Mehrgelenkkette zwischen einem mit dem ersten Abdeckelement verbundenen Drehgelenk und einem fahrzeugfesten Drehgelenk ausbilden, wobei die Mehrgelenkkette vorzugsweise mehrere Hebelelemente, z. B. in der Form stangenartiger Elemente, und gegebenenfalls auch wenigstens ein Zugseil oder ein anderes geeignetes Übertragungselement enthalten kann.

Grundsätzlich kann die Erfindung bei unterschiedlichen im Rahmen einer Verdeckbewegung bewegten Abdeckelementen für eine Öffnung eines Verdeckablageraums und anderer Öffnungen z. B. gegenüber der Karosserie oder Verkleidungsteilen Anwendung finden, und es können jeweils zwei oder mehrere Antriebe zu einem Antriebssystem zusammengefasst sein. Bei einer Gestaltung des Cabriolet-Fahrzeugs mit möglichst geringer Bauteilanzahl, d. h. beispielsweise mit einer einteiligen Abdeckung des Verdeckkastens, kann das erste Abdeckelement ein Verdeckkastendeckel und das zweite Abdeckelement eine Gestängeklappe zur Abdeckung einer Gestängedurchtrittsöffnung sein. Gleichwohl kann das zweite Abdeckelement auch zum Abdecken eines anderen abdeckungsbedürftigen Bereichs z. B. an der Verkleidung oder im Bereich der Hutablage oder von Kopfstützen oder eines Überrollschutzes oder eines Windschotts ausgelegt sein.

Die Erfindung ist nicht auf die angegebene Kombination der Merkmale der Ansprüche beschränkt. Es ergeben sich darüber hinaus Möglichkeiten, einzelne Merkmale, auch soweit sie aus den Ansprüchen, der nachfolgenden Beschreibung von Ausführungsformen oder unmittelbar aus der Zeichnung hervorgehen, miteinander im Rahmen der Ansprüche zu kombinieren. Die Bezugnahme der Ansprüche auf die Zeichnung durch Verwendung von Bezugszeichen soll den Schutzumfang der Ansprüche nicht beschränken.

Die hier offenbarte Technologie wird nun anhand der Figuren der Zeichnung näher erläutert.

Es zeigt:
- Fig. 1: eine vereinfachte Draufsicht auf ein erfindungsgemäß ausgebildetes Cabriolet-Fahrzeug mit einem geschlossenen Verdeck;
- Fig. 2: eine ausschnittsweise perspektivische Ansicht des Cabriolet-Fahrzeugs der Fig. 1 bei geöffnetem Verdeck und einer Offenstellung eines Verdeckkastendeckels und damit drehbar verbundenen Gestängeklappen;
- Fig. 3 bis Fig. 6: jeweils eine vereinfachte Teilseitenansicht des Cabriolet-Fahrzeugs gemäß Fig. 1, wobei das Verdeck jeweils abgelegt ist und der Verdeckkastendeckel sowie die Gestängeklappen aus ihren geöffneten Positionen sukzessive in ihre geschlossenen Positionen überführt werden;
- Fig. 7: eine dreidimensionale Darstellung eines Bereiches des Verdeckkastendeckels und einer der Gestängeklappen, wobei der Verdeckkastendeckel kurz vor Erreichen seiner Schließposition und die Gestängeklappe in ihrer Endposition gegenüber dem Verdeckkastendeckel dargestellt sind; und
- Fig. 8 eine Fig. 7: entsprechende Darstellung des Verdeckkastendeckels und der Gestängeklappe, wobei die Gestängeklappe nach wie vor in ihrer Endposition gegenüber dem Verdeckkastendeckel angeordnet und zusammen mit dem Verdeckkastendeckel in dessen Schließposition verstellt ist.

In den Figuren sind gleiche oder funktionsgleiche Elemente mit gleichen Bezugszeichen versehen.

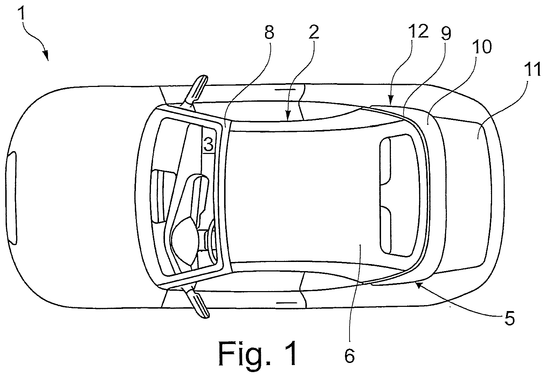

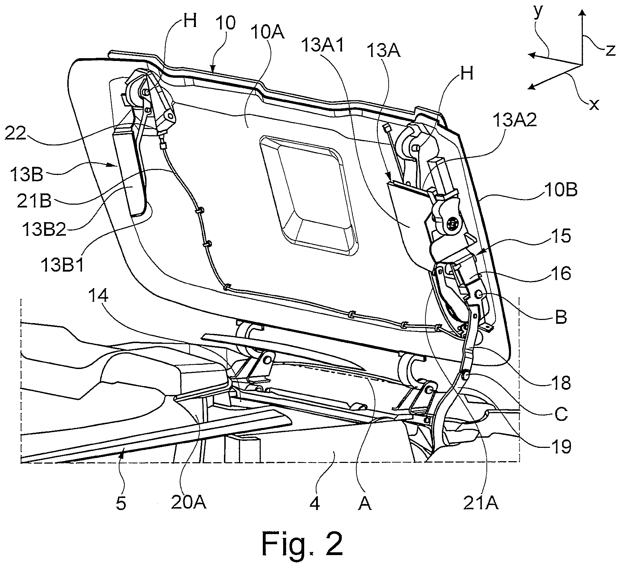

In Fig. 1 ist ein Cabriolet-Fahrzeug 1 mit einem Verdeck 2 ersichtlich, wobei das Verdeck 2 in einer einen Fahrgastraum bzw. Fahrzeuginnenraum 3 überdeckenden geschlossenen Position angeordnet ist. Die Fig. 2 zeigt einen hinteren Bereich 4 des Cabriolet-Fahrzeugs 1 und das Verdeck 2 in einer den Fahrzeuginnenraum 3 nach oben freigebenden offenen Position. In diesem Zustand ist das Verdeck 2 in einem Verdeckstauraum bzw. Verdecckasten 4 in das Innere einer Fahrzeugkarosserie 5 verlagert und dort abgelegt.

Das hier als Soft-Top mit einem Verdeckbezug 6 ausgeführte Verdeck 2 ist in beliebiger Weise mittels eines Verdeckgestänges zwischen der geschlossenen Position und der im heckseitigen Verdeckkasten 4 angeordneten offenen Position verlagerbar.

Der Verdeckbezug 6 des Verdecks 2 erstreckt sich von einem Windschutzscheibenrahmen 8 entgegen einer Fahrzeugfrontrichtung X bis zu einem Stoffhaltebügel bzw. Spannbügel 9 des Verdecks 2, der in geschlossener Verdeckposition oberhalb eines ersten Abdeckelements 10 zur Abdeckung des Verdeckstauraums 4, welches hier als Verdeckkastendeckels 10 bezeichnet wird, angeordnet ist. Der Verdeckkastendeckel 4 ist an der Fahrzeugkarosserie 5 bzw. einem Fahrzeugaufbau nach oben aufschwenkbar gehalten. Heckseitig an den Verdeckkastendeckel 10 grenzt bei der dargestellten Karosserieform eine Heckklappe 11.

In Fahrtrichtung X gesehen wird die Kontur des Verdeckkastendeckels 10 bzw. des Fahrzeugaufbaus 5 beidseitig um den Fahrzeuginnenraum 3 mit einer fahrzeugfesten Seitenverkleidung 12 fortgesetzt. Zwischen der Seitenverkleidung 12 und dem Verdeckkastendeckel 10 ist in Fahrzeugquerrichtung Y jeweils ein bewegliches zweites Abdeckelement 13A, 13B angeordnet, die nach der gebräuchlichen Terminologie als Gestängeklappen 13A, 13B bezeichnet werden. Die Gestängeklappen 13 sind vorliegend an dem Verdeckkastendeckel 10 schwenkbeweglich gelagert und werden zusätzlich mit diesem gemeinsam verstellt, wenn der Verdeckkastendeckel 10 zur Freigabe oder zum Abdecken des Verdeckkastens 4 bewegt wird.

Bei einer Verdecköffnungsbewegung des Verdecks 2 wird zunächst der Spannbügel 9 von dem Verdeckgestänge mit einem hinteren Endbereich in die Öffnungsposition aufwärts verschwenkt, so dass anschließend der Verdeckkastendeckel 10 zur Freigabe des Verdeckkastens 4 für das Verdeck 2 verlagerbar ist. Bei geöffnetem Verdeckkastendeckel 10 wird das gesamte Verdeck 2 in den Verdeckkasten 4 verlagert, woraufhin der Verdeckkastendeckel 10 wiederum abgesenkt wird und das im Verdeckkasten 4 befindliche Verdeck 2 von oben abdeckt.

Die Bewegung des Verdeckkastendeckels 10 und der Gestängeklappen 13A, 13B ausgehend von der Offenstellung des Verdeckkastendeckels 10 bis in die Schließstellung des Verdeckkastendeckels 10 bei abgelegtem Verdeck 2 wird nachfolgend näher beschrieben.

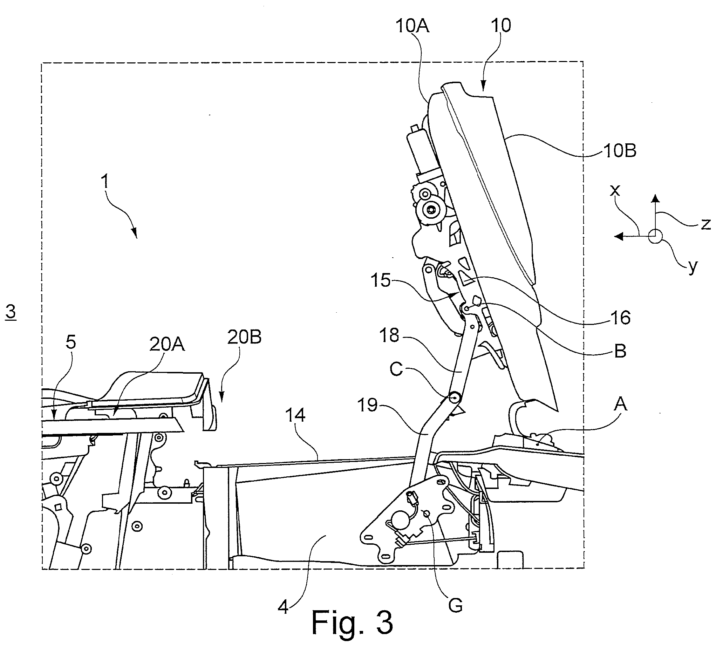

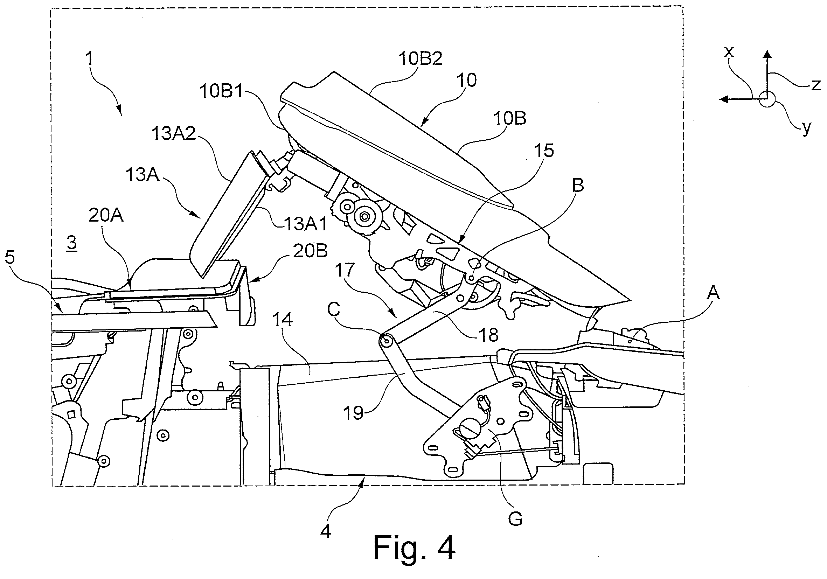

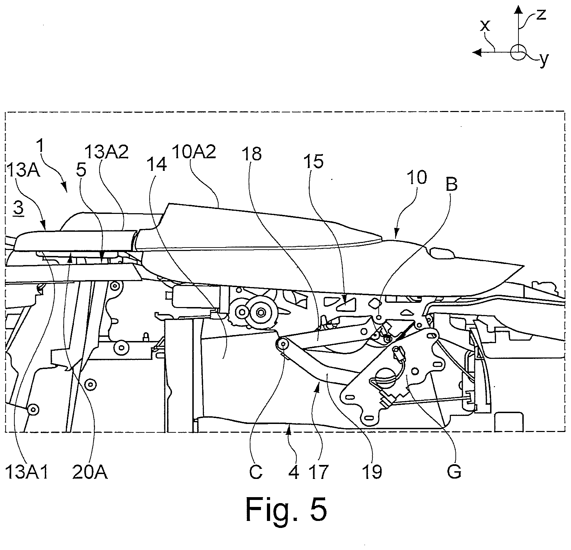

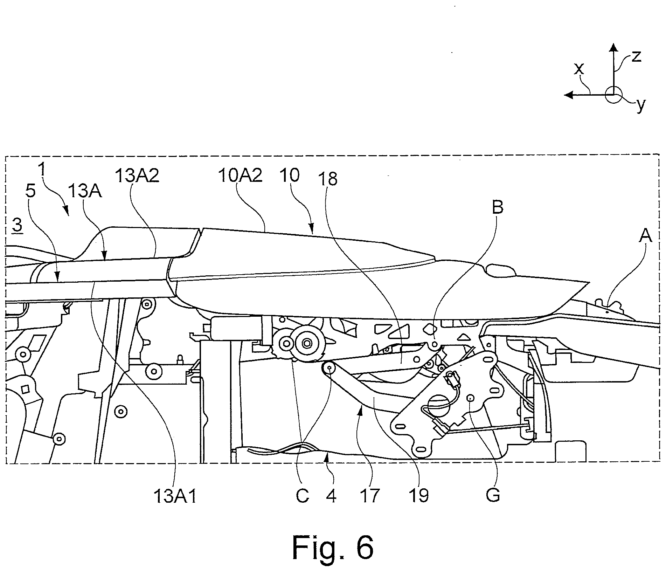

Die Fig. 3 zeigt den Verdeckkastendeckel 10 in einer geöffneten Position bzw. in einer Offenstellung, in der der Verdeckkastendeckel 10 eine Öffnung 14 des Verdeckkastens 4 freigibt und in der eine Stellbewegung des Verdecks 2 zwischen der Verdeckschließstellung und Verdeckablagestellung erlaubt ist. Die Fig. 4 und Fig. 5 zeigen jeweils Zwischenstellungen des Verdeckkastendeckels 10 zwischen der Offenstellung des Verdeckkastendeckels 10 und einer in Fig. 6 dargestellten Schließstellung des Verdecckastendeckels 10. Hierfür ist am Verdeckkastendeckel 10 ein Antrieb 15 angebracht, der vorliegend einen in beide Drehrichtungen betreibbaren Elektromotor 16 aufweist. Über den Elektromotor 16, ist der Verdeckkastendeckel 10 um eine Drehachse A, die fest mit dem Fahrzeugaufbau 5 verbunden ist, im Bereich des Verdeckkastens 4 schwenkbar.

Der Antrieb 15 kann grundsätzlich jedwede Getriebe- bzw. Antriebsausgestaltung, z. B. mit einer Mehrgelenkkinematik, drehenden Wellen, einem Schnecken- /Spindel-/Zahnradgetriebe, einem Steigungskabel, usw. aufweisen und als Antriebsquelle auch mit einem Hydraulik- oder Pneumatikmotor ausgeführt sein.

Da der Elektromotor 16 an dem Verdeckkastendeckel 10 gelagert ist, wird eine modulartige Vormontage des Verdeckkastendeckels 10 mit den Gestängeklappen 13A, 13B erleichtert. Die Lage der Abtriebswelle des Motors 16 kann jede sinnvolle Ausrichtung annehmen, insbesondere jedoch horizontal in Fahrzeuglängs- bzw. Fahrzeugquerrichtung X bzw. Y oder vertikal bzw. in Fahrzeughochrichtung Z bezogen auf die Fahrbahn. Dargestellt ist eine Lage normal zur Fahrzeugmittelebene.

Zur Verschwenkung des Verdeckkastendeckels 10 mittels des Elektromotors 16 weist der Antrieb 15 eine Stellhebeleinrichtung 17 mit einer Mehrgelenkkette zwischen einem hier direkt an einem Abtrieb des Elektromotors 16 und somit am Verdeckkastendeckel 10 angeordneten ersten Drehgelenk B und einem fahrzeugfesten Drehgelenk G auf. Die Mehrgelenckette umfasst dabei in der gezeigten Ausführung ein erstes Hebelelement 18 und ein zweites Hebelelement 19, wobei das erste Hebelelement 18 mit dem ersten Drehgelenk B und über ein weiteres Drehgelenk C mit dem zweiten Hebelelement 19 verbunden ist. Das zweite Hebelelement 19 ist mit dem Fahrzeugaufbau 5 im Bereich des Drehgelenkes G drehbar verbunden.

Zum Öffnen des Verdeckkastendeckels 10 werden die Hebelelemente 18 und 19 aus den in Fig. 6 dargestellten abgesenkten Positionen vom Motor 16 in Richtung der in Fig. 3 dargestellten aufgerichteten Positionen verschwenkt, in der der Verdeckkastendeckel 10 in seiner geöffneten Position angeordnet ist. Wenn der Motor 16 die Hebelelemente 18 und 19 in die entgegengesetzte Richtung verstellt, wird der Verdeckkastendeckel 10 wieder aus seiner Offenstellung in seine Schließstellung zurück verschwenkt.

Die Bewegungen der Gestängeklappen 13A, 13B erfolgen gekoppelt mit der Bewegung des Verdeckkastendeckels 10 und synchron zueinander. Die Gestängeklappen 13A und 13B sind in Bezug auf den Verdeckkastendeckel 10 zwischen einer ersten, in Fig. 3 dargestellten eingeklappten Stellung und einer zweiten, in Fig. 5 und Fig. 6 dargestellten ausgeklappten Stellung bzw. Endposition verstellbar. In den ersten, eingeklappten Stellungen geben die Gestängeklappen 13A und 13B jeweils den Durchtritt des Verdeckgestänges 7 durch so genannte Gestängedurchtrittsöffnungen 20A, 20B im Bereich der Seitenverkleidung 12 bzw. des Fahrzeugaufbaus 5 während einer Verdeckbewegung frei und liegen mit Unterseiten 13A1, 13B1 jeweils an einer Unterseite 10A des Verdeckkastendeckels 10 an. In den zweiten, ausgeklappten Stellungen decken die Gestängeklappen 13A, 13B die Gestängedurchtrittsöffnungen 20A, 20B ab und Oberseiten 13A2, 13B2 der Gestängeklappen 13A, 13B bilden mit einer Oberseite 10B des Verdeckkastendeckels 10 eine gemeinsame Oberfläche bzw. Oberseite des Cabriolet-Fahrzeuges 1 oberhalb des dann vollständig abgedeckten Verdeckkastens 4.

Zur Bewegungskopplung ist zwischen dem Verdeckkastendeckel 10 und den Gestängeklappen 13 eine Koppeleinrichtung vorgesehen, welche bei der vorliegenden Ausführung Seilzüge 21A, 21B umfasst, die einerseits mit Seilzuganbindungen an dem Verdeckkastendeckel 10 und andererseits mit Aufnahmepunkten 22 an den Gestängeklappen 13A, 13B verbunden sind.

Die Seilzüge 21A, 21B stellen so genannte Bowdenzüge dar, die so ausgestaltet sind, dass sie zur Verkürzung der Seillänge und mithin zum Einklappen der Gestängeklappen 13A, 13B während des Bewegungsablaufs des Verdeckkastendeckels 10 in Eingriff mit einer entsprechenden Aufnahme gerät. Dies bewirkt, dass die Gestängeklappen 13A, 13B über die Seilzüge 21A, 21B beim Verschwenken des Verdeckkastendeckels 10 zwischen der ersten, eingeklappten Stellung und der zweiten, ausgeklappten Stellung verstellbar sind.

Der Ablauf zur Bewegung der Gestängeklappen 13A, 13B in Verbindung mit der Bewegung des Verdeckkastendeckels 10 während einer Schließbewegung des Verdeckkastendeckels 10 erfolgt bei dem in den Figuren ersichtlichen Ausführungsbeispiel gemäß den nachfolgend beschriebenen Schritten.

Wenn der abgelegte Zustand des Verdecks 2 erkannt wird und der Verdeckkastendeckel 10 sich in der in Fig. 3 gezeigten Offenstellung befindet, bewirkt ein Signal zum Schließen des Verdeckkastens 4, dass das Hebelelement 18 von dem Motor 16 gedreht und der Verdeckkastendeckel 10 in Richtung der geschlossenen Position bewegt wird. Dabei werden die Seilzüge 21A und 21B betätigt und die hier mit Federkraft in Ausklapprichtung vorgespannten Gestängeklappen 13A und 13B gegenüber dem Verdeckkastendeckel 10 um Drehachsen H verstellt, die am Verdeckkastendeckel 10 festgelegt sind. Zusätzlich werden die Gestängeklappen 13A und 13B gemeinsam mit dem Verdeckkastendeckel 10 in Richtung von dessen Schließstellung bewegt.

Ein elektrisches Stellelement kann bestimmen, wann die Bowdenzüge 21A, 21B die Bewegung der Gestängeklappen 13A, 13B auslösen und wann nicht. Dazu können entsprechende Sensoren vorgesehen sein.

Der Antrieb 15 bzw. die Seilzugführungen und die Seilzuglängen der Seilzüge 21A, 21B sind so ausgelegt, das die Gestängeklappen 13A, 13B während einer Schwenkbewegung des Verdeckkastendeckels 10 in Richtung seiner Schließstellung gegenüber dem Verdeckkastendeckel 10 in ihren Endposition angeordnet sind, bevor der Verdeckkastendeckel 10 seine Schließposition erreicht. Mit anderen Worten sind die Gestängeklappen 13A und 13B bereits in ihren Endpositionen angeordnet, bevor der Verdecckastendeckel 10 in der Schließposition angeordnet ist. Dadurch wird erreicht, dass die Bewegung der Gestängeklappen 13A, 13B gegenüber dem Verdeckkasten 10 während einer Schließbewegung des Verdeckkastendeckels 10 vor der Bewegung des Verdeckkastendeckels 10 beendet ist und unerwünschte Kollisionen zwischen den Gestängeklappen 13A, 13B und dem Fahrzeugaufbau 5 vermieden werden.

Vorliegend erreichen die Gestängeklappen 13A, 13B ihre Endpositionen gegenüber dem Verdeckkastendeckel 10 kurz bevor der Verdecckastendeckel 10 in seine Schließstellung verstellt ist und bereichsweise randseitig mit seiner Unterseite 10A auf dem Fahrzeugaufbau 5 aufliegt. Die Gestängeklappen 13A, 13B sind bei Erreichen ihrer Endpositionen in Fahrzeughochrichtung Z in der in Fig. 5 gezeigten Weise noch vom Fahrzeugaufbau 5 beabstandet und werden anschließend zusammen mit dem Verdeckkastendeckel 10 von oben bereichsweise mit ihren Unterseiten 13A1, 13B1 auf den Fahrzeugaufbau 5 aufgelegt, wenn der Verdeckkastendeckel 10 mit seiner Unterseite 10A mit dem Fahrzeugaufbau 5 in Kontakt kommt.

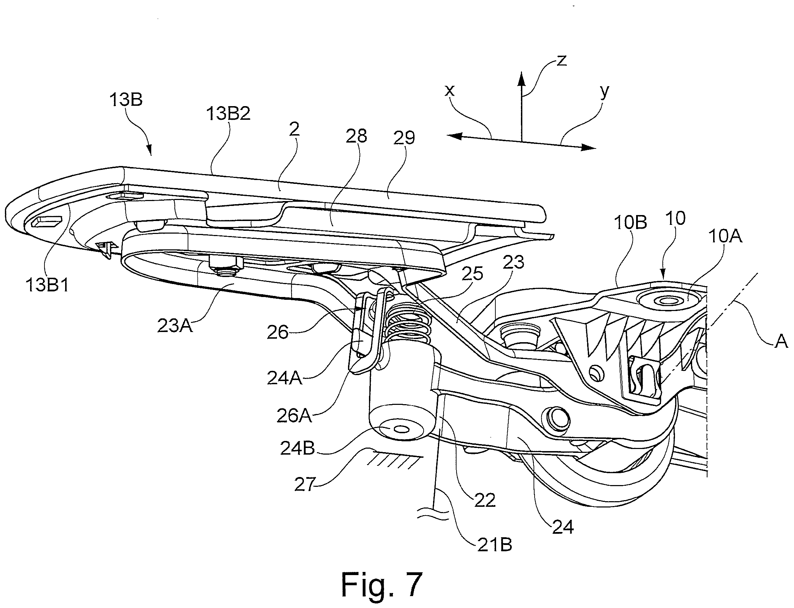

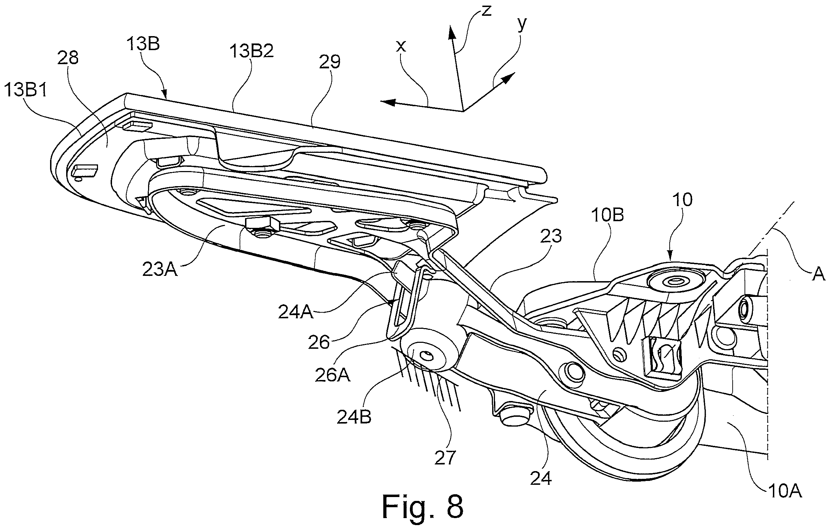

Die Gestängeklappen 13A, 13B sind in der in Fig. 7 und Fig. 8 dargestellten Art und Weise, die jeweils lediglich die Gestängeklappe 13B zeigen, jeweils über einen Lenker 23 um die Drehachsen H gegenüber dem Verdeckkastendeckel 10 verschwenkbar. Der Lenker 23 ist an seinem freien Ende jeweils mit einer rahmenartigen Trägerstruktur 32A ausgebildet, auf der eine Trägerplatte 28 befestigt ist, auf der wiederum eine Blende 29, die der umgebenden Fahrzeugverkleidung angepasst ist, z. B. mittels einer Clipsverbidnung befestigt ist.

Zusätzlich sind Schwenkhebel 24 jeweils drehbar mit den Lenkern 23 verbunden, wobei zwischen den Schwenkhebeln 24 und den Lenkern 23 jeweils eine Federeinheit 25 angeordnet ist, deren Federkraft ein freies Ende 24A des Schwenkhebels 24 in der in Fig. 7 dargestellten Art und Weise von dem Lenker 23 wegdrückt. Dabei ist der Schwenkbereich des Schwenkhebels 24 gegenüber dem Lenker 23 begrenzt. Hierfür greift der Schwenkhebel 24 mit seinem freien Ende 24A in eine Kulissenbahnen 26 bzw. ein Langloch ein, die fest mit dem Lenker 23 verbunden ist. Dabei wirkt ein geschlossenes Ende 26A der Kulissenbahn 26 als Anschlagbereich für das freie Ende 24A des Schwenkhebels 24.

Wenn die Gestängeklappen 13A, 13B gegenüber dem Verdeckkastendeckel 10 ihre Endpositionen erreicht haben und anschließend gemeinsam mit dem Verdeckkastendeckel 10 in Richtung von dessen Schließstellung verschwenkt werden, kommen die Schwenkhebel 24 mit Hebelunterseiten 24B in Anlage mit Anschlägen 27 des Fahrzeugaufbaus 5. Dabei bewirkt die gemeinsame Schwenkbewegung des Verdeckkastendeckels 10 und der Gestängeklappen 13A, 13B, die bereits in ihren Endpositionen vorliegen, in Richtung der Schließstellung des Verdeckkastendeckels 10, dass die Schwenkhebel 24 aufgrund der Anlage an den Anschlägen 27 gegenüber den Lenkern 23 in der in Fig. 8 näher ersichtlichen Weise verschwenkt und die Federeinheiten 25 gestaucht werden.

Indem die Bewegungen der Gestängeklappen 13A, 13B gegenüber dem Verdeckkastendeckel 10 vor der Bewegung des Verdeckkastendeckels 10 in Richtung seiner Schließstellung beendet sind, wird erreicht, dass sich die Gestängeklappen 13A und 13B von oben auf die Verkleidung des Fahrzeuges bzw. den Fahrzeugaufbau 5 auflegen und damit die Gestängedurchtrittsöffnungen 20A, 20B von oben abdecken.

Der verbleibende Weg im Antrieb der Gestängeklappen 13A, 13B wird über die Federeinheiten 25 rein in Kompression umgewandelt, ohne dass sich die Gestängeklappen 13A, 13B relativ zum Verdeckkastendeckel 10 bewegen. Die Positionen der Ausgleichselemente darstellenden Schwenkhebel 24 und der Federeinheiten 25 sind dabei in Abhängigkeit des jeweils vorliegenden Anwendungsfalles frei wählbar.

Die Bewegung des Verdeckkastendeckels 10 und der Gestängeklappen 13A, 13B verläuft bei dem beschriebenen Beispiel parallel, jedoch ist bei entsprechender Seilzugführung und Seilzuglänge auch eine versetzte Bewegungsabfolge realisierbar.

### Bezugszeichenliste

- 1: Cabriolet-Fahrzeug
- 2: Verdeck
- 3: Fahrzeuginnenraum
- 4: Verdeckstrauraum, Verdeckkasten
- 5: Fahrzeugkarosserie, Fahrzeugaufbau
- 6: Verdeckbezug
- 8: Windschutzscheibenrahmen
- 9: Spannbügel
- 10: erstes Abdeckelement, Verdeckkastendeckel
- 10A: Unterseite des Verdeckkastendeckels
- 10B: Oberseite des Verdeckkastendeckels
- 11: Heckklappe
- 12: Seitenverkleidung
- 13A: zweites Abdeckelement, Gestängeklappe
- 13B: zweites Abdeckelement Gestängeklappe
- 13A1, 13B1: Unterseite der Gestängeklappe
- 13A2, 13B2: Oberseite der Gestängeklappe
- 14: Öffnung des Verdeckkastens
- 15: Antrieb
- 16: Elektromotor
- 17: Stellhebeleinrichtung
- 18: erstes Hebelelement
- 19: zweites Hebelelement
- 20A, 20B: Gestängedurchtrittsöffnung
- 21A, 21B: Seilzug
- 22: Aufnahmepunkt
- 23: Lenker
- 23A: Trägerstruktur
- 24: Schwenkhebel
- 24A: freies Ende des Schwenkhebels
- 24B: Hebelunterseite
- 25: Federeinheit
- 26: Kulissenbahn
- 26A: geschlossenes Ende der Kulissenbahn
- 27: Anschlag
- 28: Trägerplatte
- 29: Blende
- A: Drehachse
- B: Drehgelenk
- C: Drehgelenk
- G: Drehgelenk
- H: Drehachse
- X: Fahrzeuglängsrichtung
- Y: Fahrzeugquerrichtung
- Z: Fahrzeughochrichtung

## Patentansprüche

1. Cabriolet-Fahrzeug (1) mit einem Verdeck (2), das zwischen einer einen Fahrzeuginnenraum (3) überspannenden Verdeckschließstellung und einer Verdeckablagestellung in einem Verdeckstauraum (4) verlagerbar ist, und mit einem ersten Abdeckelement (10) zum zumindest teilweisen Abdecken des Verdeckstauraums (4) und wenigstens einem hiermit drehbar verbundenen zweiten Abdeckelement (13A, 13B),
wobei das erste Abdeckelement (10) zur Freigabe einer Verdeckbewegung mittels wenigstens eines Antriebs (15) um eine fahrzeugfeste Drehachse (A) aus einer den Verdeckstauraum (4) abdeckenden Schließposition heraus schwenkbar ist,
und wobei das zweite Abdeckelement (13A, 13B) während einer Bewegung des ersten Abdeckelements (10) gemeinsam mit diesem verstellt und vom Antrieb (15) um eine mit dem ersten Abdeckelement (10) fest verbundene Drehachse (G) gegenüber dem ersten Abdeckelement (10) zwischen einer Endposition, in der eine Oberseite (13A2, 13B2) des zweiten Abdeckelements (13A, 13B) und eine Oberseite (10B) des ersten Abdeckelements (10) eine gemeinsame Oberfläche bilden, und wenigstens einer zweiten Position verschwenkbar ist, in der das zweite Abdeckelement (13A, 13B) mit seiner Unterseite (13A1, 13B1) in Richtung einer Unterseite (10A) des ersten Abdeckelements (10) verschwenkt ist,
**dadurch gekennzeichnet, dass** der Antrieb (15) dazu eingerichtet ist, das zweite Abdeckelement (13A, 13B) während einer Schwenkbewegung des ersten Abdeckelements (10) in Richtung seiner Schließstellung gegenüber dem ersten Abdeckelement (10) in seine Endposition zu überführen, bevor das erste Abdeckelement (10) in seiner Schließposition vorliegt.

2. Cabriolet-Fahrzeug nach Anspruch 1,
**dadurch gekennzeichnet, dass** das zweite Abdeckelement (13A, 13B) und das erste Abdeckelement (10) zumindest bereichsweise randseitig mit ihren Unterseiten (13A1, 13B1, 10A) auf einer Fahrzeugkarosserie (5) aufliegen, wenn das erste Abdeckelement (10) in seiner Schließposition angeordnet ist.

3. Cabriolet-Fahrzeug nach Anspruch 1 oder 2,
**dadurch gekennzeichnet, dass** das zweite Abdeckelement (13A, 13B) an einem Lenker (23), der um die Drehachse (G) gegenüber dem ersten Abdeckelement (10) verschwenkbar ist, gelagert ist, wobei der Lenker (23) über eine Federeinheit (25) mit einem drehbar mit dem Lenker (23) verbundenen Schwenkhebel (24) derart zusammenwirkt, dass eine Federkraft der Federeinheit (25) ein freies Ende (24A) des Schwenkhebels (24) von dem Lenker (23) wegdrückt.

4. Cabriolet-Fahrzeug nach Anspruch 3,
**dadurch gekennzeichnet, dass** das zweite Abdeckelement (13A, 13B) in seiner Endstellung während einer Schwenkbewegung des ersten Abdeckelements (10) in Richtung seiner Schließstellung mit dem Schwenkhebel (24) an einem karosserieseitigen Anschlag (27) in Anlage kommt und gegen die Federkraft der Federeinheit (25) verstellt ist, wenn das erste Abdeckelement (10) seine Schließstellung erreicht.

5. Cabriolet-Fahrzeug nach Anspruch 3 oder 4,
**dadurch gekennzeichnet, dass** der Schwenkhebel (24) mit seinem freien Ende (24A) in eine Kulissenbahn (26) eingreift, die fest mit dem Lenker (23) verbunden ist, wobei die Kulissenbahn (26) einen Schwenkwinkelbereich des Schwenkhebels (24) gegenüber dem Lenker (23) begrenzt.

6. Cabriolet-Fahrzeug nach Anspruch 5,
**dadurch gekennzeichnet, dass** der Schwenkwinkelbereich des Schwenkhebels (24) gegenüber dem Lenker (23) derart ausgelegt ist, dass sich ein Winkel zwischen dem zweiten Abdeckelement (13A, 13B) und dem ersten Abdeckelement (10) beim Spannen der Federeinheit (25) nicht ändert.

7. Cabriolet-Fahrzeug nach einem der Ansprüche 1 bis 6,
**dadurch gekennzeichnet, dass** der Antrieb (15) über ein flexibles Zugmittel (21A, 21B) mit dem zweiten Abdeckelement (13A, 13B) in Wirkverbindung steht, über das das zweite Abdeckelement (13A, 13B) gegen die Federkraft einer weiteren Federeinheit aus der Endstellung in Richtung der Unterseite (10A) des ersten Abdeckelement (10) verschwenkbar ist.

8. Cabriolet-Fahrzeug nach einem der Ansprüche 2 bis 7,
**dadurch gekennzeichnet, dass** das erste Abdeckelement (10) über wenigstens zwei drehbar miteinander verbundene Hebelelemente (18, 19) verschwenkbar mit der Fahrzeugkarosserie (5) verbunden ist, wobei der Antrieb (15) das erste Abdeckelement (10) über die Hebelelemente (18, 19) antreibt.

9. Cabriolet-Fahrzeug nach einem der Ansprüche 1 bis 8,
**dadurch gekennzeichnet, dass** das erste Abdeckelement (10) als ein Verdeckkastendeckel und das zweite Abdeckelement (13A, 13B) als eine Gestängeklappe ausgeführt ist.
